**Europäisches Patentamt**

**European Patent Office**

**Office européen des brevets**

(19)

(11) Veröffentlichungsnummer: **0 146 071**
**B1**

(12) # EUROPÄISCHE PATENTSCHRIFT

(45) Veröffentlichungstag der Patentschrift:
03.05.89

(21) Anmeldenummer: **84114688.9**

(22) Anmeldetag: **03.12.84**

(51) Int. Cl.⁴: **H 02 B 1/02,** F 16 B 7/18,
F 16 B 37/04

(54) Vorrichtung zum stirnseitigen Befestigen eines Querprofilabschnittes an einem Hohlprofilabschnitt.

(30) Priorität: **09.12.83 DE 8335382 U**

(43) Veröffentlichungstag der Anmeldung:
**26.06.85 Patentblatt 85/26**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**BE-A- 677 183**
**FR-A- 2 169 467**
**US-A- 3 353 853**

(73) Patentinhaber: **Rittal-Werk Rudolf Loh GmbH & Co. KG,
Auf dem Stützelberg, D-6348 Herborn (DE)**

(72) Erfinder: **Debus, Jürgen, Am Ebersbach 50,
D-6344 Dietzhölztal 1 (DE)**
Erfinder: **Zachrai, Jürgen, Am Hungersberg,
D-6341 Dillenburg 8 (DE)**
Erfinder: **Koch, Hans-Georg, Sonnenstrasse 28,
D-6344 Dietzhölztal 1 (DE)**
Erfinder: **Bütergerds, Helmut, Jahnstrasse 12,
D-6245 Eschenburg 1 (DE)**

(74) Vertreter: **Vogel, Georg, Hermann-Essig-Strasse 35,
D-7141 Schwieberdingen (DE)**

ACTORUM AG

## Beschreibung

Die Erfindung betrifft eine Vorrichtung zum Befestigen eines Querprofilabschnittes mit der Stirnseite an einem Hohlprofilabschnitt mittels einer Schraube und einer Mutter, bei der der Hohlprofilabschnitt mindestens zwei senkrecht zueinander stehende Kantenseiten mit rechteckförmigen Löchern aufweist, die gleich ausgebildet und im gleichen Abstand zu der von den beiden Kantenseiten gebildeten Kante eingebracht sind, bei der in die stirnseitige Aufnahme des Querprofilabschnittes eine quaderförmige Mutter mit durchgehender Bohrung einschiebbar ist, wobei die Bohrung eine Kopfschraube mit rechteckförmigem Kopf eingesetzt ist, der mit seiner kleineren Querschnittsabmessung einer Abmessung der Löcher entspricht.

Eine Vorrichtung dieser Art ist durch die BE-A 677 183 bekannt. Bei dieser bekannten Vorrichtung ist die Kopfschraube mit einem an der quaderförmigen Mutter abstehenden Kopf versehen, der eine Querschnittsabmessung aufweist, die der der Löcher im Hohlprofilabschnitt entspricht. Ist die Mutter in den Querprofilabschnitt eingeschoben, dann muss dieser zum Festlegen am Hohlprofilabschnitt in eine Einführstellung gebracht werden, in der der Kopf der Kopfschraube in ein Loch des Hohlprofilabschnittes eingeführt werden kann. Nach dem Einführen wird der Querprofilabschnitt mit der Mutter um 90° verdreht, wobei der Kopf der Kopfschraube dann im Bereich des Loches die Kantenseite des Hohlprofilabschnittes hintergreift und den Querprofilabschnitt an dem Hohlprofilabschnitt festlegt. Ist der Querprofilabschnitt an einem Ende an einem Hohlprofilabschnitt festgelegt, dann kann am anderen Ende ein weiterer Hohlprofilabschnitt nur festgelegt werden, wenn die Verbindung beim erneuten Verdrehen des Querprofilabschnittes zum ersten Hohlprofilabschnitt wieder freigegeben ist. Dies erschwert aber den Zusammenbau eines aus Hohlprofilabschnitten und Querprofilabschnitten gebildeten Rahmengestelles.

Aus der US-A 3 353 853 ist eine Vorrichtung zum Befestigen eines Querprofilabschnittes mit der Stirnseite an einem Hohlprofilabschnitt mittels einer Schraube und eines U-Profiles bekannt, bei der der Querprofilabschnitt und der Hohlprofilabschnitt jeweils senkrecht zueinander stehende Kantenseiten aufweisen und mit quadratischen oder rechteckförmigen Löchern versehen sind. Diese Vorrichtung erfordert aber zusätzliche Verbindungselemente, um den Querprofilabschnitt mit dem U-Profil zu verbinden, das mittels der Schraubverbindung am Hohlprofilabschnitt festgelegt werden muss.

Es ist Aufgabe der Erfindung, eine Vorrichtung der eingangs erwähnten Art zu schaffen, bei der einfache Mittel erforderlich sind, die eine Verbindung eines Querprofilabschnittes an einem Hohlprofilabschnitt ohne Verdrehung des Querprofilabschnittes zulassen, so dass ein an einem ersten Hohlprofilabschnitt festgelegter Querprofilabschnitt auch am anderen Ende mit einem weiteren Hohlprofilabschnitt angebracht werden kann, ohne die Verbindung zum ersten Hohlprofilabschnitt zu lösen.

Diese Aufgabe wird nach der Erfindung dadurch gelöst, dass die Bohrung der Mutter als Gewindebohrung ausgebildet ist, in die die Kopfschraube einschraubbar ist, dass die grosse Querschnittsabmessung des Kopfes um ein vorgegebenes Mass grösser ist als die andere Abmessung der Löcher, um ein Einführen des Kopfes der schräggestellten Kopfschraube in ein Loch zu ermöglichen, und dass der Querprofilabschnitt auf mindestens zwei senkrecht zueinander stehenden Kantenseiten mit gleichen Lochreihen von Löchern versehen ist, wie der Hohlprofilabschnitt.

Bei dieser Vorrichtung wird die quaderförmige Mutter so weit auf die Kopfschraube aufgeschraubt, dass die schräggestellte Kopfschraube mit dem Kopf in ein Loch eingeführt werden kann. Nach der Ausrichtung der Kopfschraube hält der Kopf die Kopfschraube so an dem Hohlprofilabschnitt fest, dass sie nicht mehr aus dem Loch herausgezogen werden kann. Die Mutter wird dann endgültig festgezogen, wobei die Kopfschraube gedreht wird. Dazu ist dann zweckmässigerweise vorgesehen, dass die freie Stirnseite der Kopfschraube mit einer Werkzeugaufnahme versehen ist.

Das Einführen des Kopfes der Kopfschraube in ein Loch des Hohlprofilabschnittes wird nach einer Ausgestaltung dadurch erleichtert, dass die Kopfschraube im Anschluss an den Kopf einen gewindelosen Abschnitt aufweist, der im Durchmesser kleiner ist als der anschliessende Gewindeteil.

Die Mutter lässt sich dadurch unverdrehbar an dem Hohlprofilabschnitt festlegen, dass die Mutter an beiden Stirnseiten symmetrisch zur Gewindebohrung mit quadratischen oder rechteckförmigen Ansätzen versehen ist, die im Querschnitt dem Querschnitt der Löcher und in der Höhe der Wandstärke des Hohlprofilabschnittes entsprechen.

Die Festlegung des Querprofilabschnittes an der Mutter kann nach einer Ausgestaltung dadurch auch in axialer Richtung verbessert werden, dass die parallel zur Gewindebohrung der Mutter verlaufenden Seiten mit sacklochartigen Gewindeaufnahmen versehen sind. Zusätzliche Schrauben legen dann den Querprofilabschnitt an der Mutter fest. Dabei hat sich eine Ausgestaltung für zweckmässig erachtet, die dadurch gekennzeichnet ist, dass die Muttern der Gewindeaufnahmen der Mutter auf einer zu den Stirnseiten parallelen Ebenen angeordnet sind.

Die Anbringungsmöglichkeiten an dem Hohlprofilabschnitt für andere Bauteile oder Abdeckungen lassen sich nach einer weiteren Ausgestaltung dadurch erhöhen, dass in den Kantenseiten des Hohlprofilabschnittes und des Querprofilabschnittes um eine halbe Lochteilung versetzt zwischen den quadratischen oder rechteckförmigen Löchern zusätzliche Bohrungen eingebracht sind und dass der Hohlprofilabschnitt der Kante der Kantenseiten abgekehrt, abstehende Befestigungsschenkel trägt, von denen einer L-förmig abgebogen ist und der andere eine Verbreiterung der zugeordneten Kantenseite bildet.

Einen allseitig bündigen Übergang von dem Querprofilabschnitt zum Hohlprofilabschnitt erhält man nach einer Ausgestaltung dadurch, dass der Querprofilabschnitt gleiches Profil wie der Hohlprofilabschnitt aufweist. Dabei kann zur Erhöhung der Anbringungsmöglichkeiten durchaus vorgesehen sein, dass eine Kantenseite mit einem durchgehenden Längsschlitz zur Aufnahme von Schiebemuttern versehen ist und dass eine Kantenseite symmetrisch zu den Lochreihen der beiden Kantenseiten mit den quadratischen oder rechteckförmigen Löchern eingebrachte Bohrungen trägt.

Die Erfindung wird anhand eines in Explosionsdarstellung gezeigten Ausführungsbeispiels näher erläutert.

Bei dem Ausführungsbeispiel wird mittels der Mutter 30 und der Kopfschraube 34 der Querprofilabschnitt 20 stirnseitig mit dem Hohlprofilabschnitt 10 verbunden.

Der Hohlprofilabschnitt 10 hat die beiden Kantenseiten 11 und 12, die senkrecht zueinander stehen und in der Kante 19 zusammenlaufen. Im wesentlichen hat der Hohlprofilabschnitt 10 eine quadratische Innenaufnahme. Die Kantenseite 11 ist der Kante 19 abgekehrt verbreitert und am Ende rechtwinklig eingebogen, so dass ein L-förmiger Befestigungsschenkel 13 entsteht. Die Kantenseite 12 bildet in der Verlängerung den flachen Befestigungsschenkel 14. Auf die Bedeutung dieser Befestigungsschenkel 13 und 14 braucht im Rahmen der vorliegenden Erfindung nicht in Einzelheiten eingegangen zu werden.

In gleichem Abstand zur Kante 19 und symmetrisch dazu tragen die Kantenseiten 11 und 12 die Lochreihen mit den quadratischen oder rechteckförmigen Löchern 15 und 17. Zwischen den Löchern 15 und 17 sind um eine halbe Teilung versetzt, zusätzliche Bohrungen 16 und 18 eingebracht, die die Anbringungsmöglichkeiten am Hohlprofilabschnitt 10 erhöhen.

Der Querprofilabschnitt 20 ist im wesentlichen mit den Kantenseiten 21, 22, 23 und 24 als Vierkantprofil ausgebildet, das im Querschnitt der quadratischen Aufnahme des Hohlprofilschnittes 10 entspricht. Die beiden Kantenseiten 21 und 22 tragen gleiche Lochreihen mit den Löchern 26 und 28 und den Bohrungen 27 und 29. Der Abstand der Löcher 26 und 28 und der Bohrungen 27 und 29 von der Kante 40, an der die beiden Kantenseiten 21 und 22 zusammenlaufen, entspricht dem Abstand der Löcher 15 und 17 und der Bohrungen 16 und 18 von der Kante 19 des Hohlprofilabschnittes 10. Die Kantenseite 24 des Querprofilabschnittes 20 ist mit dem durchgehenden Längsschlitz 25 versehen, so dass Schiebemuttern bekannter Art in die Aufnahme 42 des Querprofilabschnittes 20 eingeschoben werden können. Die Kantenseite 23 ist mit einer Lochreihe von Bohrungen 41 versehen, die auf die Löcher 26 und 28 in den Kantenseiten 21 und 22 ausgerichtet sind.

Soll der Querprofilabschnitt 20 an der Kantenseite 11 des Hohlprofilabschnittes 10 befestigt werden, dann wird die quaderförmige Mutter 30 mit ihrer durchgehenden Gewindebohrung 31 auf die Kopfschraube 34 so weit aufgeschraubt, dass sie noch einen Abstand zum Kopf 36 einnimmt, der ein schräges Einführen des Kopfes 36 in ein Loch 15 der Kantenseite 11 erlaubt. Der im Querschnitt rechteckförmige Kopf 36 ist in der kleineren Querschnittsabmessung auf eine Abmessung der quadratischen oder rechteckförmigen Löcher 15 und 17 abgestimmt.

Die grössere Querschnittsabmessung des Kopfes 36 ist grösser als die andere Abmessung der Löcher 15 und 17 und zwar um ein vorgegebenes Mass, das bei schräggestellter Kopfschraube 34 die Einführung in ein Loch 15 oder 17 zulässt. Wird die Kopfschraube 34 ausgerichtet, d.h. senkrecht zur Kantenseite 11 gestellt, dann hält der Kopf 36 die Kopfschraube 34 am Hohlprofilabschnitt 10 fest, da er mit seiner grösseren Querschnittsabmessung das Loch 15 überdeckt. Die Mutter 30 wird dann festgezogen, wobei der stirnseitige quadratische Ansatz 32, der symmetrisch zur Gewindebohrung 31 liegt und in der Höhe der Wandstärke der Kantenseite 11 entspricht, in das Loch 15 eingeführt wird. Die Mutter 30 ist damit unverdrehbar im Loch 15 gehalten. Mit einem Werkzeug, das in die stirnseitige Werkzeugaufnahme 35 der Kopfschraube 34 eingeführt wird, kann die Kopfschraube 34 festgezogen werden. Der Querprofilabschnitt 20 wird mit der quadratischen Aufnahme 42 auf die am Hohlprofilabschnitt 10 festgelegte Mutter 30 aufgeschoben. Über die erste Bohrung 41 in der Kantenseite 23 wird eine Schraube eingeführt und in die zugekehrte Gewindeaufnahme 33 der Mutter 30 eingeschraubt. Der Querprofilabschnitt 20 ist dann auch axial an der Mutter 30 festgelegt. Die Mutter 30 trägt an beiden Stirnseiten quadratische oder rechteckförmige Ansätze 32 und die sacklochartigen Gewindeaufnahmen 33 liegen mit ihren Mitten auf eine Ebene, die parallel zu den Stirnseiten der Mutter 30 verläuft.

Die Kopfschraube 34 trägt im Anschluss an den Kopf 36 einen gewindelosen Abschnitt 37, der im Durchmesser kleiner ist als der anschliessende Gewindeteil. Dadurch wird das Einführen des Kopfes 36 in ein Loch 15 oder 17 des Hohlprofilabschnittes 10 erleichtert. Da die Lochreihen in den Kantenseiten 21 und 22 des Querprofilabschnittes 20 identisch angeordnet und ausgebildet sind, kann die Kopfschraube 34 auch an der Kantenseite 21 oder 22 des Querprofilabschnittes 20 festgelegt werden. Auf diese Weise lässt sich ein weiterer Profilabschnitt stirnseitig mit dem Querprofilabschnitt 20 verbinden. Im einfachsten Fall kann der Hohlprofilabschnitt 10 und der Querprofilabschnitt 20 von demselben Profilstrang abgelängt sein.

Soll der Querprofilabschnitt 20 an zwei feststehenden Hohlprofilabschnitten angebracht werden, dann ist eine Ausgestaltung von Vorteil, die dadurch gekennzeichnet ist, dass der Querprofilabschnitt 20 an beiden Enden jeweils einen U-förmigen Abschnitt aufweist, der in axialer Richtung des Querprofilabschnittes der Abmessung der Mutter 30 in Richtung der Gewindebohrung entspricht. Der Querprofilabschnitt kann dann quer auf die an den Hohlprofilabschnitten festgelegten Muttern 30 aufgeschoben und mittels Schrauben daran festgeschraubt werden. Für das Festziehen der Kopfschraube 34 ist von Vorteil, wenn die Kopfschraube ein Linksgewinde hat, da dann die gewohnte Rechtsdrehung beim Anziehen erreicht wird.

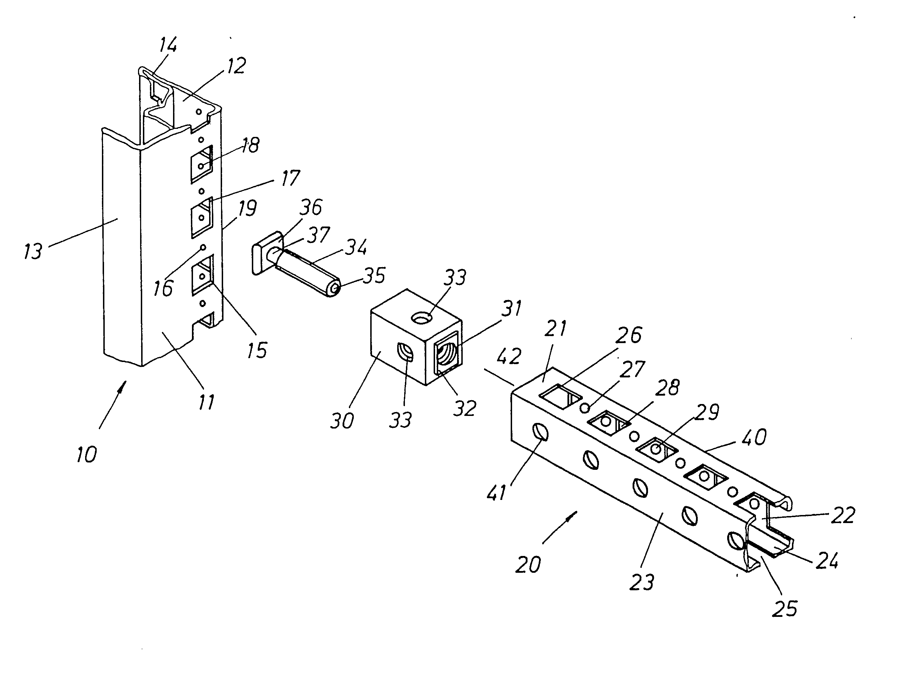

## Patentansprüche

1. Vorrichtung zum Befestigen eines Querprofilabschnittes (20) mit der Stirnseite an einem Hohlprofilabschnitt (10) mittels einer Schraube (34) und einer Mutter (30), bei der der Hohlprofilabschnitt (10) mindestens zwei senkrecht zueinander stehende Kantenseiten (11, 12) mit rechteckförmigen Löchern (15, 17) aufweist, die gleich ausgebildet und im gleichen Abstand zu der von den beiden Kantenseiten (11, 12) gebildeten Kante (19) eingebracht sind, bei der in die stirnseitige Aufnahme des Querprofilabschnittes (20) eine quaderförmige Mutter (30) mit durchgehender Bohrung einschiebbar ist, wobei die Bohrung eine Kopfschraube (34) mit rechteckförmigem Kopf (36) eingesetzt ist, der mit seiner kleineren Querschnittsabmessung einer Abmessung der Löcher (15, 17) entspricht, dadurch gekennzeichnet, dass die Bohrung der Mutter (30) als Gewindebohrung (31) ausgebildet ist, in die die Kopfschraube (34) einschraubbar ist, dass die grosse Querschnittsabmessung des Kopfes (36) um ein vorgegebenes Mass grösser ist als die andere Abmessung der Löcher (15, 17), um ein Einführen des Kopfes (36) der schräggestellten Kopfschraube (34) in ein Loch (15, 17) zu ermöglichen, und dass der Querprofilabschnitt (20) auf mindestens zwei senkrecht zueinander stehenden Kantenseiten (21, 22) mit gleichen Lochreihen von Löchern (26, 28) versehen ist wie der Hohlprofilabschnitt (10).

2. Vorrichtung nach Anspruch 1, dadurch gekennzeichnet, dass die Kopfschraube (34) im Anschluss an den Kopf (36) einen gewindelosen Abschnitt (37) aufweist, der im Durchmesser kleiner ist als der anschliessende Gewindeteil.

3. Vorrichtung nach Anspruch 1 oder 2, dadurch gekennzeichnet, dass die Mutter (30) an beiden Stirnseiten symmetrisch zur Gewindebohrung (31) mit quadratischen oder rechteckförmigen Ansätzen (32) versehen ist, die im Querschnitt dem Querschnitt der Löcher (15, 17, 26, 28) und in der Höhe der Wandstärke des Hohlprofilabschnittes (10) entsprechen.

4. Vorrichtung nach einem der Ansprüche 1 bis 3, dadurch gekennzeichnet, dass die parallel zur Gewindebohrung (31) der Mutter (30) verlaufenden Seiten mit sacklochartigen Gewindeaufnahmen (33) versehen sind.

5. Vorrichtung nach Anspruch 4, dadurch gekennzeichnet, dass die Muttern der Gewindeaufnahmen (33) der Mutter (30) auf einer zu den Stirnseiten parallelen Ebene angeordnet sind.

6. Vorrichtung nach einem der Ansprüche 1 bis 5, dadurch gekennzeichnet, dass in den Kantenseiten (11, 12, 21, 22) des Hohlprofilabschnittes (10) und des Querprofilabschnittes (20) um eine halbe Lochteilung versetzt zwischen den quadratischen oder rechteckförmigen Löchern (15, 17, 26, 28) zusätzliche Bohrungen (16, 18, 27, 29) eingebracht sind.

7. Vorrichtung nach einem der Ansprüche 1 bis 6, dadurch gekennzeichnet, dass der Hohlprofilabschnitt (10) der Kante (19) der Kantenseiten (11, 12) abgekehrt abstehende Befestigungsschenkel (13, 14) trägt, von denen einer L-förmig abgebogen ist und der andere eine Verbreiterung der zugeordneten Kantenseite (12) bildet.

8. Vorrichtung nach einem der Ansprüche 1 bis 7, dadurch gekennzeichnet, dass der Querprofilabschnitt (20) gleiches Profil wie der Hohlprofilabschnitt (10) aufweist.

9. Vorrichtung nach Anspruch 8, dadurch gekennzeichnet, dass eine Kantenseite (24) mit einem durchgehenden Längsschlitz (25) zur Aufnahme von Schiebemuttern versehen ist.

10. Vorrichtung nach Anspruch 8 oder 9, dadurch gekennzeichnet, dass eine Kantenseite (23) symmetrisch zu den Lochreihen der beiden Kantenseiten (21, 22) mit den quadratischen oder rechteckförmigen Löchern (26, 28) eingebrachte Bohrungen (41) trägt.

11. Vorrichtung nach einem der Ansprüche 1 bis 10, dadurch gekennzeichnet, dass die freie Stirnseite der Kopfschraube (34) mit einer Werkzeugaufnahme (35) versehen ist.

12. Vorrichtung nach einem der Ansprüche 1 bis 11, dadurch gekennzeichnet, dass der Querprofilabschnitt (20) an beiden Enden jeweils einen U-förmigen Abschnitt aufweist, der in axialer Richtung des Querprofilabschnittes der Abmessung der Mutter (30) in Richtung der Gewindebohrung entspricht.

13. Vorrichtung nach einem der Ansprüche 1 bis 12, dadurch gekennzeichnet, dass das Gewindeteil der Kopfschraube (34) als Linksgewinde ausgebildet ist.

## Claims

1. Device for securing a transverse structural member (20) by its end face to a hollow structural member (10) by means of a screw (34) and a nut (30), wherein the hollow structural member (10) has at least two side faces (11, 12), which lie at right angles to each other and are provided with rectangular holes (15, 17) which are identical and are provided at an identical distance from the edge (19) formed by the two side faces (11, 12), wherein a parallelepiped nut (30) having a bore extending therethrough is insertable into the receiving end face of the transverse structural member (20), a headed screw (34) being inserted into the bore and having a rectangular head (36) which, with its smaller cross-sectional dimension, corresponds to a dimension of the holes (15, 17), characterised in that the bore in the nut (30) is a threaded bore (31) into which the headed screw (34) is insertable by a screw-connection process, in that the large cross-sectional dimension of the head (36) is greater than the other dimension of the holes (15, 17) by a prescribed amount in order to permit the head (36) of the inclinedly titled headed screw (34) to be introduced into a hole (15, 17), and in that the transverse structural member (20) is provided with identical rows of holes (26, 28), just like the hollow structural member (10), on at least two side faces (21, 22), which lie at right angles to each other.

2. Device according to claim 1, characterised in that the headed screw (34), at the connection with the head (36), has a threadless portion (37) which has a smaller diameter than the connecting threaded part.

3. Device according to claim 1 or 2, characterised in that the nut (30) is provided with square or rectangular extensions (32) on both end faces symmetrically relative to the threaded bore (31), which shoulders have a cross-section corresponding to the cross-section of the holes (15, 17, 26, 28) and a height corresponding to the wall thickness of the hollow structural member (10).

4. Device according to any of the claims 1 to 3, characterised in that the sides which extend parallel to the threaded bore (31) in the nut (30) are provided with threaded receiving portions (33) in the form of blind-holes.

5. Devices according to claim 4, characterised in that the threaded receiving portions (33) of the nut (30) are disposed in a plane parallel to the end faces.

6. Device according to any of claims 1 to 5, characterised in that additional bores (16, 18, 27, 29) are provided in the side faces (11, 12, 21, 22) of the hollow structural member (10) and of the transverse structural member (20) so as to be offset by half a hole separation between the square or rectangular holes (15, 17, 26, 28).

7. Device according to any of claims 1 to 6, characterised in that the hollow structural member (10) of the edge (19) of the side faces (11, 12) has fixing arms (13, 14) which protrude in a bent-back manner, one of the arms being bent to form an 'L' shape and the other arm forming a widening of the associated side face (12).

8. Device according to any of claims 1 to 7, characterised in that the transverse structural member (20) has the same profile as the hollow structural member (10).

9. Device according to claim 8, characterised in that one side face (24) is provided with a longitudinal slot (25), extending therethrough, to receive sliding nuts.

10. Device according to claim 8 or 9, characterised in that one side face (23) has bores (41) provided symmetrically relative to the rows of holes in the two side faces (21, 22) having the square or rectangular holes (26, 28).

11. Device according to any of claims 1 to 10, characterised in that the free and face of the headed screw (34) is provided with a tool carrier (35).

12. Device according to any of claims 1 to 11, characterised in that the transverse structural member (20) has, at each of its two ends, a respective U-shaped portion which corresponds, in the axial direction of the transverse structural member, to the dimension of the nut (30) in the direction of the threaded bore.

13. Device according to any of claims 1 to 12, characterised in that the threaded part of the headed screw (34) is in the form of a left-hand thread.

**Revendications**

1. Dispositif de fixation en bout, ou frontale, d'un profilé transversal (20) à un profilé creux (10) au moyen d'une vis (34) et d'un écrou (30), dispositif dans lequel le profilé creux (10) comporte au moins deux côtés (11, 12) perpendiculaires l'un à l'autre, percés de trous rectangulaires (15, 17) qui ont la même configuration et sont disposés à la même distance de l'arête (19) formée par ces deux côtés (11, 12) et dans lequel un écrou (30) parallélipipédique, percé d'un alésage traversant, peut être inséré dans l'ouverture de l'extrémité du profilé transversal (20), une vis (34) à tête (36) rectangulaire, dont la petite dimension correspond à une dimension des trous (15, 17), étant insérée dans cet alésage, dispositif caractérisé en ce que, l'alésage de l'écrou (30) présente un taraudage (31), dans lequel la vis (34) à tête peut être vissée, la grande dimension, en section, de la tête (36) est plus grande que l'autre dimension des trous (15, 17) dans une proportion prédéterminée pour permettre d'insérer cette tête (36), la vis (34) étant disposée obliquement, dans un trou (15, 17), et le profilé transversal (20) comporte sur au moins deux côtés (21, 22), perpendiculaires l'un à l'autre, les mêmes rangées de trous (26, 28) que le profilé creux (10).

2. Dispositif selon la revendication 1, caractérisé en ce, que la vis (34) à tête comporte une partie (37) non filetée, qui se raccorde à sa tête (36) et dont le diamètre est inférieur à celui de la partie filetée adjacente.

3. Dispositif selon la revendication 1 ou 2, caractérisé en ce que l'écrou (30) comporte sur ses deux faces d'extrémité des saillies (32) carrées ou rectangulaires, qui sont symétriques par rapport à son taraudage (31), dont la section correspond à celles des trous (15, 17) et dont la hauteur correspond à l'épaisseur de matière du profilé creux (10).

4. Dispositif selon l'une des revendications 1 à 3, caractérisé en ce, que les côtés de l'écrou (30), parallèles à son taraudage (31), comportent des logements taraudés (33) borgnes.

5. Dispositif selon la revendication 4, caractérisé en ce que les filets des logements taraudés (33) de l'écrou (30) sont disposés dans un plan parallèle aux faces d'extrémité de cet écrou.

6. Dispositif selon l'une des revendications 1 à 5, caractérisé en ce que des perçages auxiliaires (16, 18, 27, 29), décalés de la moitié du pas des trous, sont formés sur les côtés (11, 12, 21, 22) du profilé creux (10) et du profilé transversal (20) entre ces trous (15, 17, 26, 28) carrés ou rectangulaires.

7. Dispositif selon l'une des revendications 1 à 6, caractérisé en ce que le profilé creux (10) porte, à l'opposé de l'arête (19) formée par des côtés (11, 12), des ailes (13, 14) de fixation, qui s'en éloignent, dont l'une est coudée en L et dont l'autre forme un élargissement du côté (12) correspondant.

8. Dispositif selon l'une des revendications 1 à 7, caractérisé en ce, que le profilé transversal (20) a le même profil que le profilé creux (10).

9. Dispositif selon la revendication 8, caractérisé en ce, qu'un côté (24) comporte sur toute sa longueur une fente (25) destinée à loger des écrous coulissants.

10. Dispositif selon la revendication 8 ou 9, caractérisé en ce, qu'un côté (23) comporte des perçages (41), formés symétriquement par rapport aux trous (26, 28) carrés ou rectangulaires des rangées de trous ménagées dans les deux côtés (21, 22).

11. Dispositif selon l'une des revendications 1 à 10, caractérisé en ce que la face d'extrémité de la vis (34) à tête comporte un logement (35) de prise d'outil.

12. Dispositif selon l'une des revendications 1 à 11, caractérisé en ce que le profilé transversal (20) présente, à chaque extrémité, une partie en U qui correspond, dans le sens axial de ce profilé, à la dimension de l'écrou (30) dans le sens du taraudage de ce dernier.

13. Dispositif selon l'une des revendications 1 à 12, caractérisé en ce que la partie filetée de la vis (34) à tête présente un filetage à gauche.